Europäisches Patentamt

European Patent Office

Office européen des brevets

(19)

(11) Publication number: **0 292 248**
**A2**

# (12) EUROPEAN PATENT APPLICATION

(21) Application number: **88304475.2**

(22) Date of filing: **18.05.88**

(51) Int. Cl.⁴: **G 07 F 7/10**
**G 07 F 7/08**

(30) Priority: **19.05.87 GB 8711744**

(43) Date of publication of application:
**23.11.88 Bulletin 88/47**

(84) Designated Contracting States:
**AT BE CH DE ES FR GR IT LI LU NL SE**

(71) Applicant: **The General Electric Company, p.l.c.**
**1 Stanhope Gate**
**London W1A 1EH (GB)**

(72) Inventor: **Steiner, Anthony Francis**
**89 Coval Lane**
**Chelmsford Essex (GB)**

**Edmonds, Richard**
**35 Coverside Road**
**Great Glen Leicester LE8 0EB (GB)**

(74) Representative: **Tolfree, Roger Keith**
**GEC p.l.c. Central Patent Department Chelmsford Office**
**Marconi Research Centre West Hanningfield Road**
**Great Baddow Chelmsford Essex CM2 8HN (GB)**

(54) **Data processing system.**

(57) The memory area within an electronic token of the 'smart card' type comprising a processor (4), memory (7, 8, 9) and input/output means (5) is divided into an execute only region and a non-volatile read/write region.

A method of loading an applications program is described in which the program is loaded into a portion of the read/write region by software methods and in which the application program may be altered if the use of the card alters.

| Operating system | Secure memory | |
| --- | --- | --- |
| | Execute only | 1k Bytes |
| Applications program | Write memory | |
| | | moveable boundary 7k Bytes |
| Data memory | Read Write memory | |

Figure 2

## Description

### Data processing System

This invention relates to a data processing system of the type comprising one or more portable electronic tokens, each comprising processing means, memory means and input/output means and one or more fixed read/write terminals, and in particular but not exclusively it relates to such a system as is disclosed in United Kingdom published patent application number GB2173623A, which is incorporated herein by reference.

Transactions between such tokens, often known as 'smart cards' and the read/write terminals are performed under the control of software, known as applications software, residing in both the card and the terminals. The algorithms implemented by the applications software in the card generally determines in full the operation of the card. Conventionally, the application software is embedded into the card at manufacture and is contained within a ROM such that it can not be altered. Each ROM is therefore designed with a particular program and application in mind and to change the ROM, and hence the use of the card, necessitates a considerable expenditure and time and requires new masks to be made.

The present invention arose from the need to produce a card, the software within which is relatively easily changeable to satisfy each different application of the card.

According to the present invention in a first aspect there is provided a method of loading software into a portable electronic token of the type comprising processing means, memory means and input/output means and adapted for interaction with a read/write terminal, wherein the memory means comprises an execute only or read only memory region and a non-volatile read/write region, which method comprises operatively coupling the token and terminal, interchanging messages, under control of an operating system stored in the execute or read only region, between the token and terminal to check whether the token and terminal are authorised, and, only if authorisation is established; loading a program code adapted to form an application program into a portion of the read/write memory region; establishing a partition between the loaded application program and the remainder of the read/write memory region, thus leaving the remainder of the read/write region free for data storage.

In a preferred embodiment, the token is adapted to interact with the terminal by inductive coupling and such coupling is used to load the applications software.

The position of the partition can be varied dependent upon the envisaged uses of the token. The application software will then remain within the electronic token even when it is not operatively coupled to a terminal, until it is wished to load a new program.

Advantageously, the execute only memory region may include within it software such that after applications software has been loaded into the read/write region, checked and tested, the software routine alters, by means of software or hardware, the circuitry within the token such that the applications program is permanently stored within the token and may not be removed or altered by means of the loading procedure described above.

In a second aspect the invention provides an electronic system comprising portable electronic token comprising processing means, memory means and input/output means and a read/write terminal for interacting with the token, wherein the memory means and input/output means a read/write terminal for interacting with the token, wherein the memory means comprises an execute only or Read only memory region and a non-volatile read/write memory region and wherein applications software is stored in a variable size portion of the read/write region.

The Read/write region may be an E$^2$PROM, battery-barked RAM or any other appropriate non-volatile Read/Write memory.

Embodiments of the invention will now be described by way of example only with reference to the accompanying drawings in which,

Figure 1 shows in block form elements of the electronic token and coupler embodying the present invention and

Figure 2 shows the arrangement of memory areas within the token.

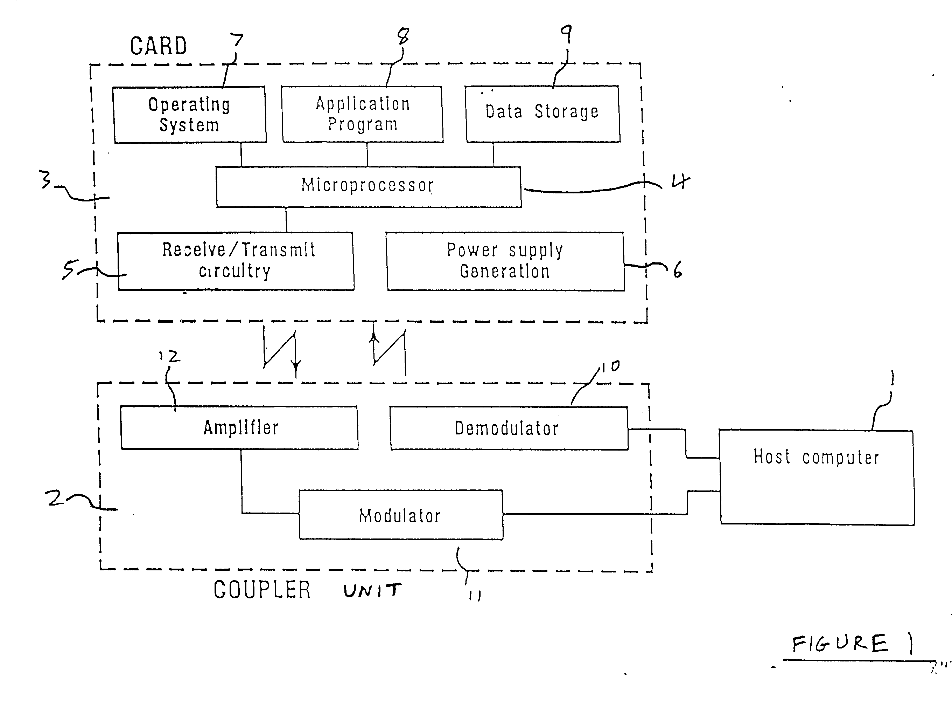

Referring to Figure 1 the general arrangement of an electronic token or card system is shown. A host computer 1 which may be a personal computer (PC) is connected to a coupler unit 2. This unit is arranged to inductively couple with a portable electronic token, shown here as card 3. This is a small hand-held token, perhaps of credit-card sized proportion. Coupling between the card and coupler is achieved inductively by means of modulated fields, as is described in the aforementioned British patent application no. GB2173623A. Card 3 comprises a micro-processor 4 of any convenient type, a Receive/Transmit circuit 5 and power supply means 6 which may either be an on board battery or, more preferably, means for tapping off power which is inductively coupled from the coupler 2. The card further includes a memory region which is divided, according to the invention, into three areas; an operating system area 7, applications program area 8 and data storage area 9. Operating system area 7 is of execute only type and areas 8 and 9 are of non volatile read/write memory, and may for instance be E$^2$ ROM or battery-backed RAM.

Operating system, application program and data storage may occupy adjacent areas of memory within one integrated circuit. The microprocessor and memory may be embodied in a single integrated circuit.

The coupler 2 comprises a demodulator 10 and modulator 11 for processing modulated signals received or transmitted after amplification by an amplifier 12. Unmodulated signals, either after demodulation or before modulation are fed to or from suitable communication lines of host computer 1.

The loading procedure for such a system will now be described. Upon power up i.e. operatively coupling the card 3 and coupler 2, the microprocessor 4 begins to execute instructions residing in the operating system. As stated above, in the preferred system the memory portion storing the operating system is execute only and will be set upon manufacture. The data within it can be neither read nor written to by any application program. Embodiments of the invention are however envisaged in which this region is Read only. An initialisation sequence follows, an 'answer to reset' character is issued and then a loading routine begins. The card waits to receive a message to indicate that it is in communication with the loading terminal, which in this case is coupled to an host computer 1. If the card receives a suitable message before a defined time period has elapsed, an interchange of messages between host computer 1 and the card takes place and these messages are used by the card to check whether authorised software is being used within the host computer 1. Such authorisation procedures will be well known to those skilled in the art and can be used to prevent a card being programmed by means other than that defined by the card manufacturer or user. For instance, coded messages could be exchanged, and authentication or encryption processes using shared secret keys may be implemented. If the card has been satisfied that the loader, i.e. host computer 1, is authorised, the card will clear its application memory before receiving a sequence of executable codes which are arranged to form the new application programme. This code is then stored in the application programme area 8 of the card. Finally, the software within the card is used to establish a partition between the applications program area 8 and remainder of the read/write memory region to establish a data storage area 9, in which data relevant to the intended uses of the card can be stored and altered as desired.

The partitioning can be established by any suitable means. Typically, the partition may be established by having a pointer in memory which points to each address in turn as the applications software is loaded, byte by byte. Once this software is loaded, the final byte addressed by the pointer can be stored in a register, and, when data is subsequently stored, by means of a WRITE COMMAND, this register is accessed and used to provide a suitable address, in the allowed region, which is encoded in a header transmitted with the data.

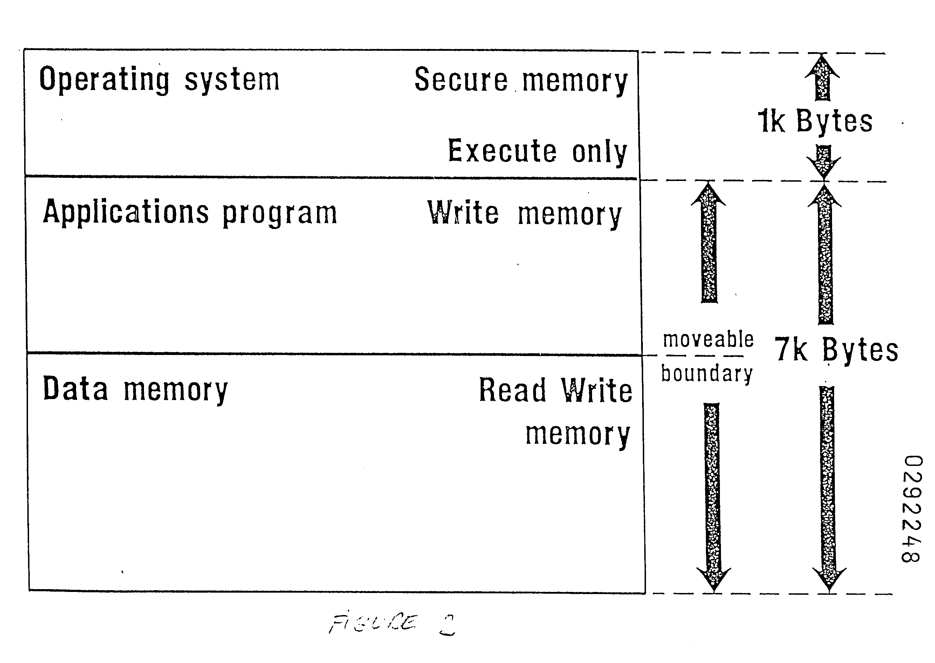

The memory areas of the card are shown in Figure 2 where one example is shown having a total memory capability of 8 k bytes. This value may of course be varied as desired. Once the partition mentioned above has been established, then the two memory regions 8 and 9 are set up, although, as shown in figure 2, the exact memory requirements may vary and be movable dependent upon the particular applications program, and memory requirements for data storage.

After the initial programming stage, the card may be removed from the terminal and will retain the applications program. When the card is subsequently powered up and does not receive a "loading" message after issuing its answer to reset, the operating system within the card directs the microprocessor to commence execution of which ever application program is held within its memory.

Should a card not be satisfied of the authenticity of a loading station, it will not load a new application program and will halt execution.

The loading function within the card can also be disabled by an applications program. Once an application program has been downloaded, debugged and tested, it is often desirable that the card's function be fixed for the remainder of its life. This can be easily achieved by a slight modification to the application program such that it calls a routine held within the operating system which serves to remove a software or hardware link, disabling the loading routine.

**Claims**

1. A method of loading software into a portable electronic token (1) of the type comprising processing means (4), memory means (7,8,9) and input/output means (5) and adapted for interaction with a read/write terminal (2), wherein the memory means comprises an execute only or Read only memory region (7) and a non-volatile read/write region (8,9), which method comprises operatively coupling the token and terminal, interchanging messages, under control of an operating system stored in the execute or Read only region, between the token and terminal to check whether the token and terminal are authorised, and, only if authorisation is established; loading a program code adapted to form an application program into a portion of the read/write memory region and establishing a partition between the loaded application program and the remainder of the read/write memory region, thus leaving the remainder of the read/write region free for data storage.

2. A method as claimed in claim 1 wherein control of the token is subsequently passed to the application program after appropriate authorisation is established.

3. A method as claimed in claim 1 or claim 2 wherein the token is adapted to interact with the terminal by inductive coupling and such coupling is used to load the applications software.

4. A method as claimed in any of the preceding claims wherein the execute only memory region includes software adapted to alter the software or hardware of the token after an applications program has been loaded such that the applications program cannot be removed or altered.

5. An electronic system comprising a portable electronic token (1) comprising processing means (4), memory means (7,8,9) and input/output means (5) and a read/write terminal (2) for interacting with the token, wherein the memory means comprises an execute only or Read only memory region (7) and a non-volatile read/write memory region (8,9) and wherein applications software is stored in a variable size portion (8) of the read/write region.

6. A system as claimed in claim 5 wherein the read/write region is an $E^2$ PROM.

7. A system as claimed in claim 5 wherein the read/write region is a battery-backed ROM.

CARD

| Operating System | Application Program | Data Storage |

Microprocessor

| Receive/Transmit circuitry | Power supply Generation |

COUPLER UNIT

| Amplifier | Demodulator |

Modulator

Host computer

0292248

FIGURE 1

| | |
|---|---|
| Operating system | Secure memory |
| | Execute only |
| Applications program | Write memory |
| Data memory | Read Write memory |

1k Bytes

moveable boundary  7k Bytes

0292248

FIGURE 2